Europäisches Patentamt

European Patent Office

Office européen des brevets

(19)

(11) Publication number: **0 254 002 B1**

(12) # EUROPEAN PATENT SPECIFICATION

(45) Date of publication of patent specification: **29.01.92**

(51) Int. Cl.⁵: **C09J 107/00**, C09J 109/00, C08L 21/00, C08L 57/02, C08L 23/16

(21) Application number: **87108200.4**

(22) Date of filing: **05.06.87**

(54) **Pressure sensitive adhesive.**

(30) Priority: **20.06.86 JP 145562/86**

(43) Date of publication of application:
**27.01.88 Bulletin 88/04**

(45) Publication of the grant of the patent:
**29.01.92 Bulletin 92/05**

(84) Designated Contracting States:
**DE FR GB IT NL**

(56) References cited:
**FR-A- 1 338 037**
**FR-A- 2 154 058**
**US-A- 4 143 858**
**US-A- 4 335 026**

(73) Proprietor: **SUMITOMO CHEMICAL COMPANY, LIMITED**
**Kitahama 4-chome 5-33**
**Chuo-ku Osaka 541(JP)**

(72) Inventor: **Takao, Hiroyoshi**
**7-16, Kurosunadai-3-chome**
**Chiba-shi(JP)**
Inventor: **Kuribayashi, Hideyuki**
**1353-4, Shiizu**
**Ichihara-shi(JP)**
Inventor: **Usuda, Eiichi**
**9, Yushudainishi-1-chome**
**Ichihara-shi(JP)**

(74) Representative: **Henkel, Feiler, Hänzel & Partner**
**Möhlstrasse 37**
**W-8000 München 80(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Background of the Invention

Field of the Invention

This invention relates to a pressure sensitive adhesive comprising as a softener an ethylene-propylene copolymer having such a low molecular weight that the intrinsic viscosity is not more than 0.5 which is obtainable by oxidative degradation of a corresponding ethylene-propylene copolymer.

Description of the Prior Art

The properties mainly required for a pressure sensitive adhesive tape include so-called tack, adhesiveness and retentivity. The tack, namely initial adhesion means such a property that a pressure sensitive adhesive tape adheres on slight touch. The adhesiveness means stress required when a pressure sensitive adhesive tape adhered to a substrate is peeled off from the substrate, and the greater the stress, the higher the adhesiveness. The retentivity means a property required for retaining for a long period of time the adhesive state just after the tape is adhered to a substrate under pressure. It is quite important for a pressure sensitive adhesive tape to have these three properties in a good balance.

Pressure sensitive adhesives are made mainly of an elastomer such as natural rubber, styrene-butadiene rubber or acrylic rubber. When the pressure sensitive adhesive consists only of such an elastomer, it has a sufficient retentivity, but lacks tack and adhesiveness, so that it cannot be used in practice. Therefore, generally, a tackifier is added to the elastomer to impart thereto tack and adhesiveness. As a tackifier, known are natural rosin, modified rosin, terpene resin, aliphatic hydrocarbon resin, aromatic hydrocarbon resin, indene-coumarone resin, styrenic petroleum resin and the like. In general, when a tackifier is added to an elastomer, the tack and the adhesiveness thereof are improved though the retentivity is lowered.

When greater tack is required, a softener is further added to the elastomer-tackifier mixture. A mineral oil, a liquid polybutene or the like is commonly used as the softener.

In general, addition of a softener, however, results in reduction of adhesiveness and retentivity to such an extent that the adhesive cannot be used in practice, though the tack is improved. This has been a fatal defect of the softener.

Summary of the Invention

It is an object of the present invention to provide a novel pressure sensitive adhesive comprising a softener by which the defects mentioned above have been solved and which is effective in the enhancement of tack without lowering the adhesiveness and retentivity when used in a pressure sensitive adhesive tape.

The present inventors have made research on a softener which is effective in the improvement of tack without lowering adhesiveness and retentivity of a pressure sensitive adhesive, to find that a specific ethylene-propylene copolymer rubber can achieve the above-mentioned object.

In accordance with the present invention, there is provided a pressure sensitive adhesive comprising

(I) at least one elastomer,
(II) at least one tackifier and
(III) an ethylene-propylene copolymer having such a low molecular weight that the intrinsic viscosity is not more than 0.5 which is obtainable by oxidative degradation of a corresponding ethylene-propylene copolymer containing 30-60 weight % of propylene,
wherein the weight ratio of (III) to (I) ranges from 5/100 to 40/100.

Detailed Description of the Invention

For the elastomer and tackifier contained in the pressure sensitive adhesive of the present invention, those which are well-known are employed. The elastomer includes, for example, natural rubber, styrene-butadiene rubber, acrylic rubber and the like, and the tackifier includes, for example, natural rosin, modified rosin, terpene resin, aliphatic hydrocarbon resin, aromatic hydrocarbon resin, indene-cumarone resin, styrenic petroleum resin and the like. The weight ratio of the tackifier to the elastomer ranges preferably from 50/100 to 150/100. In the present invention, the abovementioned elastomers may be used alone or in admixture of two or more, and the above-mentioned tackifiers may also be used alone or in admixture of two or more.

In the present invention, the softener is an ethylene-propylene copolymer having such a low molecular weight that the intrinsic viscosity is not more than 0.5 which is obtainable by odixative degradation of a corresponding ethylene-propylene copolymer containing 30-60 weight % of propylene, and preferably that having such a low molecular weight that the intrinsic viscosity is not more than 0.3. When the intrinsic viscosity exceeds 0.5, a pressure sensitive adhesive tape obtained is inferior in tack, so that such an intrinsic viscosity is not desirable.

Such a copolymer can be produced by, for example, the following method:

An ethylene-propylene copolymer rubber containing 30-60 weight % of propylene is subjected to oxidative degradation with stirring in an organic solvent at l00°C or more in the presence of a radical initiator and molecular oxygen to lower the molecular weight until the intrinsic viscosity reaches not more than 0.5.

The intrinsic viscosity of the ethylene-propylene copolymer contained as a softener in the pressure sensitive adhesive of the present invention is preferably 0.5 or less. And the content of propylene in the copolymer is preferably 30-60 weight %.

The existance of carbonyl group in the ethylene-propylene copolymer obtained above is confirmed from an infra-red spectrum. The existance of carbonyl group is considered to result in an improvement of retentivity of the pressure sensitive adhesive tape of the present invention. The weight ratio of a softener to an elastomer is required to range from 5/l00 to 40/l00, preferably from l0/l00 to 30/l00. When it is less than 5/l00, a pressure sensitive adhesive tape obtained is inferior in tack. On the other hand, when it exceeds 40/l00, the tape is inferior in both adhesiveness and retentivity. In the above range, a pressure sensitive adhesive suited for making a pressure sensitive adhesive tape having excellent properties is obtained.

A pressure sensitive adhesive tape can be manufactured by, for example, the following method:

The pressure sensitive adhesive of the present invention is ordinarily dissolved in toluene or the like. The resulting solution is coated on a substrate and the thus coated substrate is then dried to remove the solvent. If necessary, a stabilizer or other additives may be further added to the adhesive. The substrate includes, for example, paper and a film of polypropylene, polyester, cellophane, polyvinyl chloride or the like. As explained above, the present pressure sensitive adhesive can impart good tack to a pressure sensitive adhesive tape without lowering adhesiveness and retentivity because an ethylene-propylene copolymer having a specific low molecular weight obtained by oxidative degradation is used as a softener.

The following examples illustrate this invention, but should not be interpreted to limit this invention. The properties of pressure sensitive adhesive tapes were measured by the following methods:

Tack: indicated by the number of the ball used in measurement at 23°C by J. Dow Rolling Ball Tack Tester. The greater the number, the higher the tack.

Adhesiveness : indicated by the stress to l80° peeling at 23°C according to JIS C-2l07. (peeling speed: 300 mm/min and unit: g/25 mm width)

Retentivity: indicated by slippage in mm of the tape caused 2 hours after a load of l kg was applied at 23°C according to JIS Z-l524. The smaller the slippage, the higher the retentivity.

The intrinsic viscosity was determined from the viscosity of a xylene solution at 75°C.

Reference Example

Into a 2-liter stainless autocalve were charged 50 g of an ethylene-propylene copolymer rubber (propylene content: 34 weight %, intrinsic viscosity: l.5) and 800 g of toluene, and stirred at l00°C to form a solution.

To the solution were subsequently added six 40-g portions of toluene solution each containing 0.5 g of l,l-bis(t-butylperoxy)-3,3,5-trimethylcyclohexane at intervals of 2 hours during which the mixture was subjected to oxidative degradation with stirring for l2 hours in the presence of air at l50°C.

The reaction mixture was poured into a large amount of methanol to recover an ethylene-propylene copolymer having an intrinsic viscosity of 0.25.

Example l

On a polypropylene film was coated a pressure sensitive adhesive solution consisting of l00 parts of natural rubber (pale crepe, $ML_{1+4}$ l00°C = 47), l00 parts of an aliphatic petroleum resin ("Tackirol® 5000", a trade mark of Sumitomo Chemical Company, Limited), 25 parts of the ethylene-propylene copolymer (propylene content: 34 weight %, intrinsic viscosity: 0.25) prepared by oxidative degradation in the Reference Example and 450 parts of toluene by means of an applicator to form a layer of 30 microns in thickness, and the thus coated film was then dried to obtain a pressure sensitive adhesive tape. The properties of this tape were such that the tack was l6, the adhesiveness was 640g/25mm and the retentivity was 2.6 mm.

This tape had such excellent properties that not only is the tack much higher than that in Comparative Example l, but also no lowering in both adhesiveness and retentivity was observed.

Comparative Example l

A pressure sensitive adhesive tape was manufactured in the same manner as in Example l, except that the ethylene-propylene copolymer was not used. The properties of this tape were such that the tack was 6, the adhesiveness was 600g/25mm and the retentivity was 3.0 mm, from which it is clear that the tape was greatly inferior in tack to that in Example I.

Comparative Example 2

A pressure sensitive adhesive tape was manufactured in the same manner as in Example I, except that an ethylene-propylene copolymer of a low moleculer weight (propylene content: 38 weight %, intrinsic viscosity: 0.26) prepared by a conventional polymerization method was substituted for the ethylene-propylene copolymer. The properties of this tape were such that the tack was I6, the adhesiveness was 640g/25mm and the retentivity was 7.7 mm, from which it is clear that the tape was improved in tack as compared with Comparative Example I, but inferior in retentivity to that in Comparative Example I.

Comparative Example 3

According to the procedure described in the Reference Example, an ethylene-propylene copolymer rubber (propylene content: 23 weight %, intrinsic viscosity: I.5) was subjected to oxidative degradation in toluene for 8 hours at I50°C with stirring in the presence of air while adding four 40-g portions of a toluene solution each containing 0.5 g of I,I-bis(t-butylperoxy)-3,3,5-trimethylcyclohexane at intervals of 2 hours, to obtain an ethylene-propylene copolymer having an intrinsic viscosity of 0.39. Using this ethylene-propylene copolymer having a low molecular weight, a pressure sensitive adhesive tape was manufactured in the same manner as in Example I. The properties of this tape were such that the tack was 9, the adhesiveness was 600g/25mm and the retentivity was 5.0 mm, from which it is clear that the tape was inferior in all properties to that in Example I.

Comparative Example 4

According to the procedure described in the Reference Example, an oxidative degradation of an ethylene-propylene copolymer was carried out for 4 hours while adding two 40-g portions of a toluene solution each containing 0.5 g of I,I-bis(t-butyl-peroxy)-3,3,5-trimethylcyclohexane at intervals of 2 hours, obtain an ethylene-propylene copolymer having a low molecular weight (propylene content: 34 weight %, intrinsic viscosity: 0.79). Using this copolymer, a pressure sensitive adhesive tape was manufactured in the same manner as in Example I. The properties of this tape were such that the tack was 8, the adhesiveness was 580g/25mm and the retentivity was 8.2 mm, from which it is evident that the tape was greatly inferior in all properties to that in Example I.

Comparative Example 5

A pressure sensitive adhesive tape was manufactured in the same manner as in Example I, except that the amount of an ethylene-propylene copolymer having a low molecular weight used was 50 parts. The properties of the pressure sensitive adhesive tape thus manufactured were such that the tack was I2, the adhesiveness was 560g/25mm and the retentivity was not less than 25 mm (weight fell down), from which it is evident that the tape was greatly inferior in all properties to that in Example I.

**Claims**

1. A pressure sensitive adhesive comprising
   (I) at least one elastomer,
   (II) at least one tackifier and
   (III) an ethylene-propylene copolymer having such a low molecular weight that the intrinsic viscosity determined from the viscosity of a xylene solution at 75°C. is not more than 0.5, which is obtainable by oxidative degradation of a corresponding ethylene-propylene copolymer containing 30-60 weight % of propylene,
   wherein the weight ratio of (III) to (I) ranges from 5/I00 to 40/I00.

2. A pressure sensitive adhesive as defined in claim I, wherein the intrinsic viscosity of (III) is not more than 0.3.

3. A pressure sensitive adhesive as defined in claim I or 2, wherein the weight ratio of (III) to (I) ranges from I0/I00 to 30/I00.

4. A pressure sensitive adhesive as defined in any of claims I to 3, wherein (I) and (II) are contained in a weight ratio of (II) to (I) ranging from 50/I00 to I50/I00.

5. A pressure sensitive adhesive as defined in any of claims I to 4, wherein (I) is a natural rubber and (II) is an aliphatic petroleum resin.

6. A method for maunfacturing the ethylene-propylene copolymer used in the pressure sensitive adhesive as defined in any of claims I to 5, wherein the oxidative degradation is carried out by treatment in an organic solvent in the presence of a radical initiator and molecular oxygen at l00°C or more.

7. A pressure sensitive adhesive tape comprising a paper or a film having coated thereon a pressure sensitive adhesive as defined in any of claims l to 5.

**Revendications**

1. Adhésif sensible à la pression, comprenant
   (I) au moins un élastomère
   (II) au moins un agent d'adhérence et
   (III) un copolymère éthylène/propylène ayant un faible poids moléculaire tel que la viscosité intrinsèque, déterminée à partir de la viscosité d'une solution dans le xylène à 75°C, ne soit pas supérieure à 0,5, que l'on peut obtenir par dégradation par oxydation d'un copolymère éthylène/propylène correspondant contenant 30 à 60% en poids de propylène,
   dans lequel le rapport pondéral de (III) à (I) est compris entre 5/100 et 40/100.

2. Adhésif sensible à la pression selon la revendication 1, dans lequel la viscosité intrinsèque de (III) n'est pas supérieure à 0,3.

3. Adhésif sensible à la pression selon la revendication 1 ou 2, dans lequel le rapport pondéral de (III) à (I) est compris entre 10/100 et 30/100.

4. Adhésif sensible à la pression selon l'une quelconque des revendications 1 à 3, dans lequel (I) et (II) sont contenus selon un rapport pondéral de (II) à (I) compris entre 50/100 et 150/100.

5. Adhésif sensible à la pression selon l'une quelconque des revendications 1 à 4, dans lequel (I) est un caoutchouc naturel et (II) est une résine de pétrole aliphatique.

6. Procédé de préparation du copolymère éthylène/propylène utilisé dans l'adhésif sensible à la pression selon l'une quelconque des revendications 1 à 5, dans lequel la dégradation par oxydation est effectuée par traitement dans un solvant organique en présence d'un agent d'amorçage radicalaire et d'oxygène moléculaire à 100°C ou plus.

7. Ruban adhésif sensible à la pression comprenant un papier ou une pellicule sur lequel est enduit un adhésif sensible à la pression selon l'une quelconque des revendications 1 à 5.

**Patentansprüche**

1. Druckempfindlicher Klebstoff, umfassend
   (1) mindestens ein Elastomeres,
   (2) mindestens ein klebrigmachendes Mittel und
   (3) ein Ethylen-Propylen-Mischpolymeres mit einem derart niedrigen Molekulargewicht, daß die aus der Viskosität einer Xylollösung bei 75°C ermittelte Intrinsicviskosität nicht mehr als 0,5 beträgt, das durch oxidativen Abbau eines entsprechenden Ethylen-Propylen-Mischpolymeren mit 30 - 60 Gew.-% Propylen erhalten wurde,
   wobei das Gewichtsverhältnis (3)/(1) im Bereich von 5/100 bis 40/100 liegt.

2. Druckempfindlicher Klebstoff nach Anspruch 1, dadurch gekennzeichnet, daß die Intrinsicviskosität von (3) nicht mehr als 0,3 beträgt.

3. Druckempfindlicher Klebstoff nach Anspruch 1 oder 2, dadurch gekennzeichnet, daß das Gewichtsverhältnis (3)/(1) im Bereich von 10/100 bis 30/100 liegt.

4. Druckempfindlicher Klebstoff nach einem der Ansprüche 1 bis 3, dadurch gekennzeichnet, daß (1) und (2) in einem Gewichtsverhältnis (2)/(1) im Bereich von 50/100 bis 150/100 vorhanden sind.

5. Druckempfindlicher Klebstoff nach einem der Ansprüche 1 bis 4, dadurch gekennzeichnet, daß es sich bei (1) um einen Naturkautschuk und (2) um ein aliphatisches Erdölharz handelt.

6. Verfahren zur Herstellung des in einem druckempfindlichen Klebstoff nach einem der Ansprüche 1 bis 5 verwendeten Ethylen-Propylen-Mischpolymeren, dadurch gekennzeichnet, daß man den oxidativen Abbau durch Behandeln in einem organischen Lösungsmittel in Gegenwart eines Radikalanspringmittels und von molekularem Sauerstoff bei 100°C oder mehr durchführt.

7. Druckempfindliches Klebeband, umfassend ein Papier oder einen Film mit einem darauf aufgetragenen druckempfindlichen Klebstoff nach einem der Ansprüche 1 bis 5.